# EUROPÄISCHE PATENTANMELDUNG

(11) **EP 4 335 275 A1**
(43) Veröffentlichungstag der Anmeldung: **13.03.2024**
(21) Anmeldenummer: 23195281.3
(22) Anmeldetag: 05.09.2023
(51) Int. Cl.: A01C 7/20

(54) **SAATGUTFÜHRUNGSELEMENT**

(30) Priorität: 06.09.2022 DE 102022122534
(71) Anmelder: Lemken GmbH & Co KG, 46519 Alpen (DE)
(72) Erfinder: van Kann, Andreas, 53949 Dahlem (DE); Wolff, Carsten, 47647 Kerken (DE)

(57) **Zusammenfassung**

Die vorliegende Erfindung betrifft ein Saatgutführungselement (5) eines Säschares (7) einer Sämaschine (1), welches von einer Dosiereinrichtung (4) zum Dosieren von rieselfähigem Saatgut aus einem Behälter (2) zugeführtes Saatgut auf einem Feldboden (22) ausbringt, wobei das ein geschlossenes Hohlprofil aufweisende Saatgutführungselement (5) mit einem Dosierabgang (13) aufweisenden Förderkanal (11) der Dosiereinrichtung (4) verbunden ist, wobei das Saatgutführungselement (5) im Bereich der Säschar (7) eine entgegen der Fahrtrichtung orientierte Austrittsöffnung (21) aufweist, wobei das Saatgutführungselement (5) im Querschnitt gesehen auf seiner dem Feldboden (22) zugewandten Unterseite (23) im Inneren einen Bodenabschnitt (25) und auf seiner dem Feldboden (22) abgewandten Oberseite (24) einen Deckenabschnitt (26) aufweist, wobei der Bodenabschnitt (25) eine geringere führende Breite (32) aufweist als der Deckenabschnitt (26).

## Beschreibung

Die vorliegende Erfindung betrifft ein Saatgutführungselement gemäß dem Oberbegriff des Anspruches 1. Weiterhin ist eine Sämaschine, insbesondere eine mechanische Drillmaschine, gemäß Anspruch 10 Gegenstand der vorliegenden Erfindung.

Beim Einsatz einer Sämaschine mit Dosiereinrichtungen, insbesondere einer mechanischen Drillmaschine, ist eine konstant gleichmäßige Längsverteilung des Saatgutes oder des Düngers, eine wesentliche Zielstellung. Darunter wird ein in Fahrtrichtung möglichst gleichbleibender Abstand bei der Ablage des Saatgutes oder des Düngers auf einem Feldboden verstanden, welcher keine größeren Lücken zwischen dem Saatgut oder dem Dünger oder Ansammlungen von Saatgut oder Dünger durch Mehrfachausbringung aufweist. Nachfolgend werden Saatgut oder Dünger vereinfachend als Körner bezeichnet.

Saatgutführungselemente der eingangs genannten Art sind aus dem Stand der Technik hinlänglich bekannt.

Aus der DE 1 203 516 B sind ein Saatgutführungselement sowie eine Sämaschine der eingangs genannten Art bekannt. Das Saatgutführungselement ist als teleskopartig ausgebildetes Saatleitungsrohr mit kreisförmigem Querschnitt eines Säschares einer Sämaschine ausgebildet, welches von einer Dosiereinrichtung zum Dosieren von rieselfähigem Saatgut aus einem Behälter zugeführtes Saatgut auf einem Feldboden ausbringt, wobei das ein geschlossenes Hohlprofil aufweisende Saatgutführungselement mit einem Dosierabgang aufweisenden Förderkanal der Dosiereinrichtung verbunden ist.

Aus der DE 28 14 883 A1 ist ein Saatgutführungselement sowie eine Sämaschine der eingangs genannten Art bekannt. Das Saatgutführungselement ist als Leitungsschlauch mit kreisförmigem Querschnitt eines Säschares einer Sämaschine ausgebildet.

Die Ablage des Saatgutes oder des Düngers mit einem möglichst gleichbleibenden Abstand zueinander in einer Schaarfurche wird durch die Dosiereinrichtung sowie die nachfolgende Führung des auszubringenden Saatgutes oder Düngers beim Durchlaufen des Förderkanals der Dosiereinrichtung und des daran angeschlossenen Saatgutführungselementes beeinflusst.

Ein Grund für eine von einer optimalen Längsverteilung abweichende Ablage besteht darin, dass die von der Dosiereinrichtung in den Förderkanal abgegebenen Körner, in Abhängigkeit von ihren mechanischen Eigenschaften, mit unterschiedlichen Geschwindigkeiten in das mit kreisförmigem Querschnitt ausgeführte Saatgutführungselement eintreten. Der in Förderrichtung konstante kreisförmige Querschnitt des Saatgutführungselementes gemäß dem Stand der Technik stellt über die gesamte Länge des Saatgutführungselementes eine gleichbleibende die Körner führende Breite dar.

Geschwindigkeitsvektoren der Körner, die von der Dosiereinrichtung im freien Fall in den Förderkanal abgegeben werden, können sowohl in Förderrichtung als auch quer zur Förderrichtung ausgerichtet sein. So kann dies insbesondere bei gleitfähigen, pillierten Körnern mit geringer Dämpfung, Reibung und in geringer Ausbringstärke, d.h. einer geringen Kornanzahl pro Zeiteinheit und somit entsprechend großen Abständen in Längsrichtung bzw. Förderrichtung zueinander, dazu führen, dass die Körner eine zickzackartige Taumelbewegung in dem Saatgutführungselement ausführen. Der nachteilige Effekt der Taumelbewegung besteht darin, dass taumelnde, langsame Körner sich beim Durchlaufend des Saatgutführungselementes in der Folge mit ideal rollenden, schnellen Körnern in der Mitte des Saatgutführungselementes überlagern. Aufgrund der Geschwindigkeitsdifferenz zwischen taumelnden Körnern und im Idealfall rollenden Körnern kommt es am Ende der im Saatgutführungselement zurückgelegten Wegstrecke zu Überlagerungen, mit der Folge einer ungleichmäßigeren Längsverteilung, was zu einer von einer optimalen Nutzung der Anbaufläche abweichenden Ausnutzung führt.

Ausgehend vom vorstehend genannten Stand der Technik liegt der Erfindung die Aufgabe zugrunde, ein Saatgutführungselement sowie eine Sämaschine der eingangs genannten Art weiterzubilden, welche die Nachteile des Standes der Technik vermeidet, insbesondere durch eine verbesserte Förderung im Saatgutführungselement eine verbesserte Längsverteilung des auszubringenden Saatgutes oder Düngers ermöglicht.

Diese Aufgabe wird durch eine Dosiereinrichtung mit den Merkmalen des unabhängigen Patentanspruchs 1 sowie eine landwirtschaftliche Maschine mit den Merkmalen des nebengeordneten Patentanspruchs 10 gelöst. Vorteilhafte Ausführungsformen und Weiterbildungen sind den hiervon abhängigen Ansprüchen zu entnehmen.

Gemäß dem Anspruch 1 wird eine Saatgutführungselement eines Säschares einer Sämaschine vorgeschlagen, welches von einer Dosiereinrichtung zum Dosieren von rieselfähigem Saatgut aus einem Behälter zugeführtes Saatgut auf einem Feldboden ausbringt, wobei das ein geschlossenes Hohlprofil aufweisende Saatgutführungselement mit einem Dosierabgang aufweisenden Förderkanal der Dosiereinrichtung verbunden ist, wobei das Saatgutführungselement im Bereich der Säschar eine entgegen der Fahrtrichtung orientierte Austrittsöffnung aufweist. Erfindungsgemäß ist vorgesehen, dass das Saatgutführungselement im Querschnitt gesehen auf seiner dem Feldboden zugewandten Unterseite im Inneren einen Bodenabschnitt und auf seiner dem Feldboden abgewandten Oberseite einen Deckenabschnitt aufweist, wobei der Bodenabschnitt eine geringere Breite aufweist als der Deckenabschnitt. Die sich zwischen dem Deckenabschnitt und dem Bodenabschnitt einstellende Querschnittsverjüngung des Saatgutführungselementes bewirkt, dass den Bodenabschnitt begrenzende steile Flanken und ein sich verengender Grund die Bewegungsfreiheit der Körner in Querrichtung zur Förderrichtung stark einschränken. Ein Korn, welches mit einer Querkomponente im Geschwindigkeitsvektor in das erfindungsgemäß ausgestaltete Saatgutführungselement eintritt, vollführt eine erheblich geringere Taumelbewegung gegenüber der seitlich flacher gestalteten Kontur eines Saatgutführungselementes mit kreisförmigem Querschnitt. In der Folge durchläuft das Korn das erfindungsgemäße Saatgutführungselement schneller, da der zurückzulegende Weg im Inneren des Saatgutführungselementes aufgrund der reduzierten Taumelbewegung kürzer ist.

Ein weiterer Effekt besteht darin, dass die Körner nur eingeschränkt parallel auf dem Bodenabschnitt des Saatgutführungselementes rutschen können. Vielmehr bewirkt die sich verjüngende Querschnittsform dazu, dass die Körner zunächst mehrheitlich übereinanderliegend rutschen. Dabei trägt besagte Führung durch den Bodenabstand dazu bei, dass die potentielle Energie eines obenliegenden Korns ein darunterliegendes Korn anschiebt. Zudem ist das obenliegende Korn strebt, sich in Linie hinter dem untenliegenden Korn anzuordnen.

Die Außenkontur des Saatgutführungselementes kann von der im Inneren abweichen. Dies kann beispielsweise zur Vereinfachung der Befestigung des Saatgutführungselementes der Fall sein. Weiter vorteilhaft ist die abweichende Ausgestaltung von Außenkontur und in Kontur des Saatgutführungselementes bei dessen Herstellung durch Extrusion, da sich dadurch die Formgebung des Werkzeugs vereinfacht.

Insbesondere kann ein Öffnungsquerschnittsverlauf in Förderrichtung des Saatgutführungselementes zwischen Eintrittsöffnung und Austrittsöffnung konstant sein oder in Richtung der Austrittsöffnung abnehmend ausgeführt sein. Ein sich in Förderrichtung des Saatgutführungselementes verjüngender Öffnungsquerschnittsverlauf ist vorteilhaft, da hierdurch der Effekt der Minimierung von Querbewegungen der Körner verstärkt werden kann.

Bevorzugt können der Bodenabschnitt und der Deckenabschnitt eine abschnittsweise geradlinige und/oder bogenförmige Kontur aufweisen. Wesentlich ist, dass der Querschnitt des Saatgutführungselementes zwischen dem Förderkanal dem Säschar im Grund des Bodenabschnitts einen minimal möglichen Radius aufweist. Im Idealfall kann der Bodenabschnitt V-förmig bzw. dreieckförmig ausgeführt sein. Alternative Ausführungen des Bodenabschnitts können beispielsweise eine polygonale oder parabelförmige Ausbildung der Kontur darstellen.

Insbesondere können der Bodenabschnitt und der Deckenabschnitt durch konkav oder linear verlaufende Seitenabschnitte miteinander verbunden sein.

Dabei können die Seitenabschnitte segmentiert ausgebildet sein. Unter segmentiert ausgebildeten Seitenabschnitten ist zu verstehen, dass diese in Hochrichtung des Saatgutführungselementes gesehen als aneinander gereihte Einzelabschnitte ausgeführt sind die sich ihrerseits durch Form und/oder Neigung voneinander unterscheiden können.

Gemäß einer bevorzugten Weiterbildung kann das Saatgutführungselement als ein Rohr oder als ein flexibler Schlauch ausgeführt sein.

In einer weiteren Erfindungsform kann das Saatgutführungselement längenveränderlich ausgebildet, insbesondere als längenelastisches oder teleskopisches Saatgutführungselement ausgebildet werden. Dadurch können größere Relativbewegungen zwischen Säschar und Rahmengestell kompensiert werden. In einer teleskopierbaren Ausgestaltung des als Rohr ausgeführten Saatgutführungselementes ist es von Vorteil, wenn die Teleskopsegmente in Förderrichtung einen jeweils größeren Querschnitt aufweisen. Dass bedeutet, dass die ineinander gesteckten Teleskopsegmente im oberen Bereich einen kleineren Querschnitt aufweisen als im unteren Bereich. Hierdurch wird ein Verspringen der Körner an einer Wandstärkenkante eines Segmentquerschnittes vermieden.

Bevorzugt kann das Saatgutführungselement einen im Wesentlichen geraden Verlauf aufweisen oder im Bereich des Säschares entgegen der Fahrtrichtung gekrümmt ausgeführt sein. Bei einer Ausführung des Saatgutführungselementes mit einem im Wesentlichen geraden Verlauf fallen die Körner im Wesentlichen senkrecht oder entgegen der Fahrtrichtung in eine Scharfurche.

Insbesondere kann an der Eintrittsöffnung ein flanschförmiger oder muffenförmiger Abschnitt zur Anordnung am Förderkanal angeordnet sein, wobei der flanschförmige oder muffenförmige Abschnitt einen im Wesentlichen kreisförmigen Querschnitt aufweist. Hierdurch kann der Anschluss an den Förderkanal vereinfacht werden.

Gemäß einer bevorzugten Weiterbildung kann der Bodenabschnitt als eine sich in Förderrichtung des Saatgutführungselementes erstreckende Kontur mit zumindest einem Bereich maximaler Tiefe ausgebildet sein. Den Bereich maximaler Tiefe bildet der tiefste Punkt am Fußabschnitt oder Sockelabschnitt des Bodenabschnittes. Bei einer dreieckigen oder bogenförmigen Kontur des Bodenabschnittes bildet sich dabei genau ein linienförmiger Bereich maximaler Tiefe aus.

Weiterhin wird die eingangs gestellt Aufgabe durch eine Sämaschine, insbesondere mechanische Drillmaschine, gelöst, mit zumindest einer Dosierreihe, in der mehrere Dosiereinrichtungen nebeneinander angeordnet sind, wobei jeder Dosiereinrichtung eine Säschar nachgeordnet ist, an der jeweils ein Saatgutführungselement zur Ablage von rieselfähigem Schüttgut auf einem Feldboden angeordnet ist, wobei das Saatgutführungselement nach einem der Ansprüche 1 bis 10 ausgebildet ist. Es darf auf alle Ausführungen zu der vorschlagsgemäßen Dosiereinrichtung verwiesen werden.

Insbesondere kann ein Behälter für Saatgut und/oder Dünger, an dem die Dosiereinrichtungen mit den Saatgutführungselementen angeordnet sind, ortsfest auf einem Rahmengestell angeordnet sein, wobei die Säschare gegenüber dem Rahmengestell relativbeweglich an diesem angeordnet sind.

Die vorliegende Erfindung wird nachstehend anhand eines in den Zeichnungen dargestellten Ausführungsbeispieles näher erläutert:

Es zeigen:
- Fig. 1: schematisch und exemplarisch eine Ansicht einer als mechanischen Drillmaschine ausgeführten Sämaschine von schräg hinten;
- Fig. 2: eine Teilansicht einer Dosiereinrichtung mit einem daran angeordneten, im Längsschnitt dargestellten Saatgutführungselement;
- Fig. 3: eine perspektivische Ansicht des Saatgutführungselementes;
- Fig. 4: eine Längsschnittansicht des Saatgutführungselementes gemäß Fig. 3;
- Fig. 5: eine Ansicht des Saatgutführungselementes von schräg hinten;
- Fig. 6: eine Frontalansicht auf eine Eintrittsöffnung des Saatgutführungselementes gemäß Fig. 5; und
- Fig. 7: eine Frontalansicht auf eine Austrittsöffnung des Saatgutführungselementes gemäß Fig. 3.

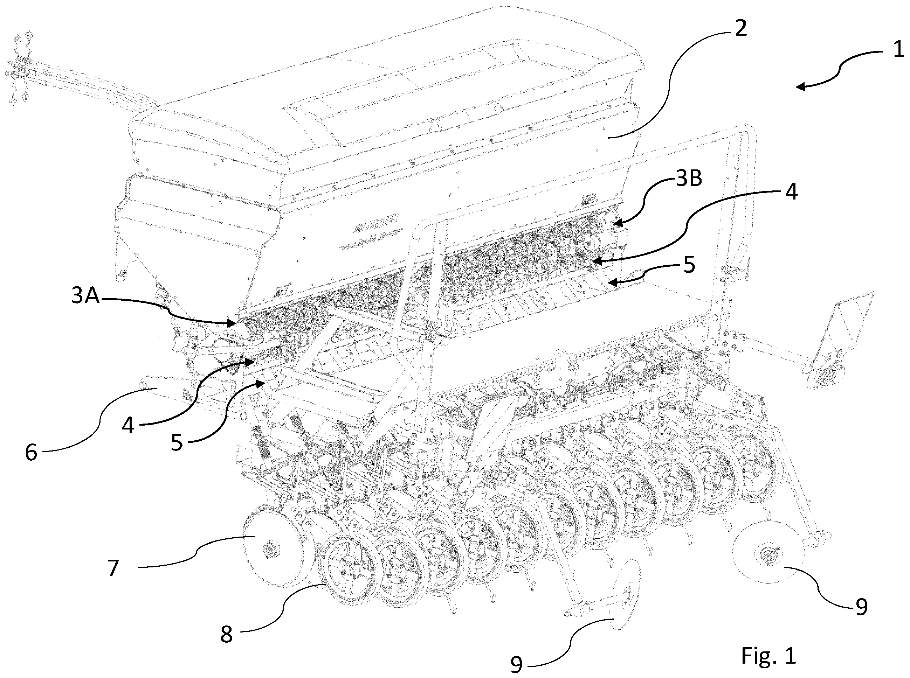

In Fig. 1 ist schematisch und exemplarisch eine Ansicht einer als mechanischen Drillmaschine ausgeführten Sämaschine 1 von schräg hinten dargestellt. Die Sämaschine 1 weist einen mit Dünger oder Saatgut befüllbaren Behälter 2 auf. nachfolgend werden Dünger oder Saatgut als Körner bezeichnet. Die Körner gelangen zu in zwei Dosierreihen 3A, 3B nebeneinander angeordneten Dosiereinrichtungen 4, welche die Körner in ein der jeweiligen Dosiereinrichtung 4 nachgeordnetes Saatgutführungselement 5 fördern. Das Saatgutführungselement 5 kann als ein Rohr oder als ein flexibler Schlauch ausgeführt sein.

Die in Dosierreihen 3A, 3B nebeneinander angeordneten Dosiereinrichtungen 4 sind an einer Wand des Behälters 2 befestigt. Der Behälter 2 ist auf einem Rahmengestell 6 der Sämaschine 1 befestigt. Die Körner gelangen von der jeweiligen Dosiereinrichtung 4 durch einen Förderkanal 11 zum Dosierabgang 13, an den das Saatgutführungselement 5 angeschlossen ist. Von dem jeweiligen Saatgutführungselement 5 gelangen die Körner weiter zu einer Säschar 7. Hinter der jeweiligen Säschar 7 ist eine Tiefenführungsrolle 8 angeordnet. An dem Rahmengestell 6 können zwei optionale Hohlscheiben 9 zur Vorlaufmarkierung angeordnet sein. Die Säschare 7 sind relativbeweglich zu dem Rahmengestell 6 und / oder zur Dosiereinrichtung 4 angeordnet.

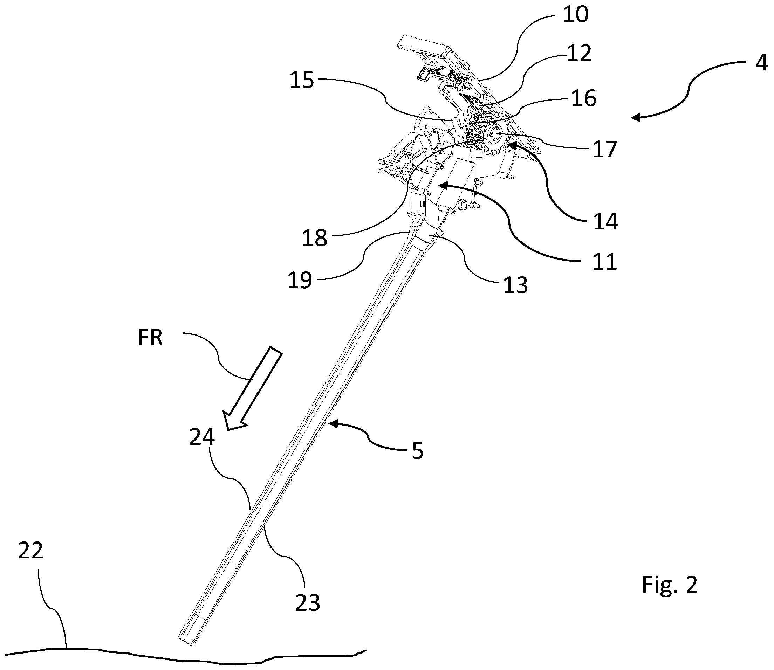

Die Darstellung in Fig. 2 zeigt eine Teilansicht einer Dosiereinrichtung 4 mit einem daran angeordneten, im Längsschnitt dargestellten Saatgutführungselement 5. Die Dosiereinrichtung 4 weist ein nicht näher dargestelltes Gehäuse mit einem Wandsegment 10 auf. Mit dem Wandsegment ist das Gehäuse der Dosiereinrichtung 4 am Behälter 2 lösbar durch eine kraft- und/oder formschlüssige Verbindung befestigt.

Die Dosiereinrichtung 4 umfasst einen Förderkanal 11, der einen Zulauf 12 und einen Dosierabgang 13 aufweist. Der Zulauf 12 ist als eine Öffnung im Wandsegment 10 ausgebildet. Über den Zulauf 12 wird aus dem Behälter 2 kommendes Korn einem Särad 14 der Dosiereinrichtung 4 zugeführt. Das Särad 14 der Dosiereinrichtung 4 ist hier und vorzugsweise mehrteilig ausgeführt. Das Särad 14 umfasst dabei ein Grobsärad 15 und ein Feinsärad 16. Das Särad 14 ist auf einer Antriebswelle 17 angeordnet. Die Antriebswelle 17 wird durch ein auf dieser drehfest angeordnetes Zahnrad 18 angetrieben.

An den Dosierabgang 13 ist das Saatgutführungselement 5 angeschlossen. Hierzu kann das Saatgutführungselement 5 einen flansch- oder muffenförmigen förmigen Abschnitt 19 aufweisen, welcher den Dosierabgang 13 in Umfangsrichtung und abschnittsweise in axialer Richtung umschließt.

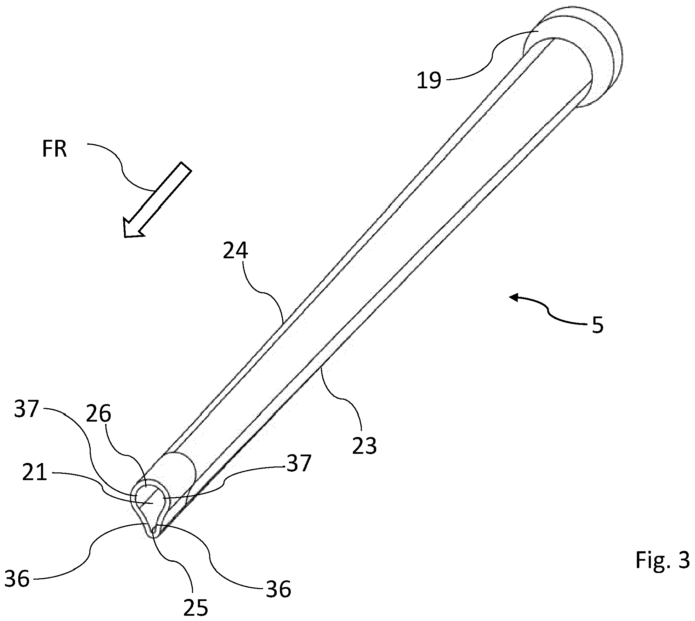

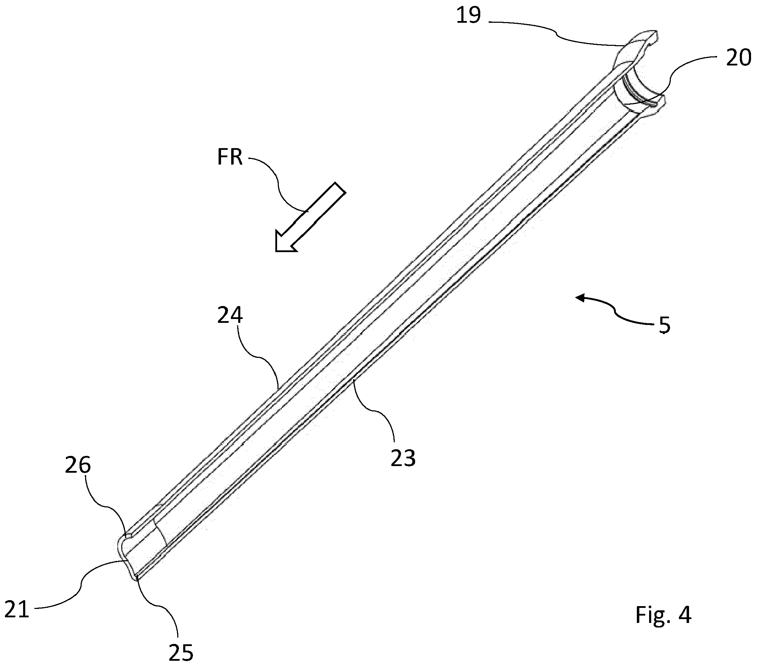

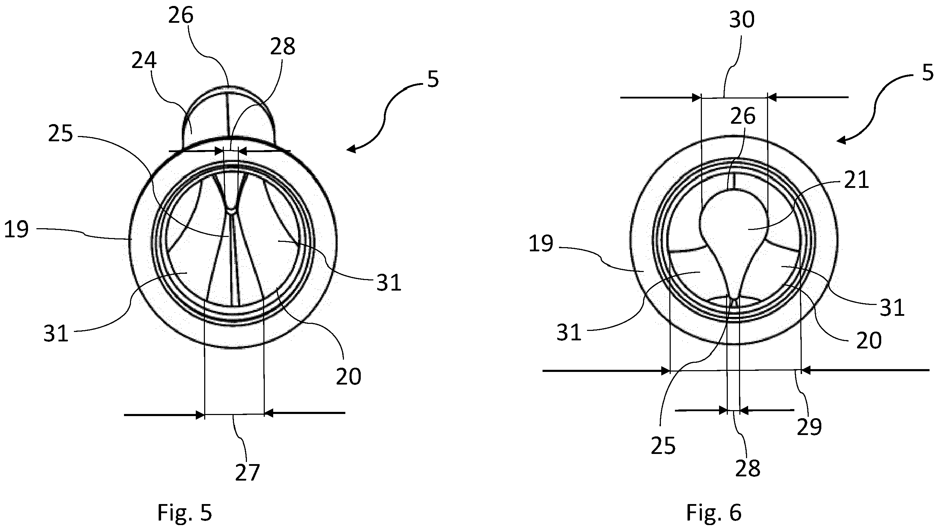

Fig. 3 zeigt eine perspektivische Ansicht des Saatgutführungselementes 5. Die Darstellung in Fig. 4 zeigt eine Längsschnittansicht des Saatgutführungselementes 5 gemäß Fig. 3. Das Saatgutführungselement 5 ist als geschlossenes Hohlprofil ausgeführt. Das Saatgutführungselement 5 weist eine dem Förderkanal 11 zugewandte Eintrittsöffnung 20 und eine Austrittsöffnung 21 am freien Ende des Saatgutführungselementes 5 auf. Das Saatgutführungselement 5 ist in Längsrichtung bzw. Förderrichtung FR gesehen zwischen der Eintrittsöffnung 20 und der Austrittsöffnung 21 in Richtung der Austrittsöffnung 21 mit einem abnehmenden Öffnungsquerschnittsverlauf ausgeführt (vgl. Fig. 5 und 6). Alternativ kann der Öffnungsquerschnittsverlauf in Längsrichtung bzw. Förderrichtung FR des Saatgutführungselementes 5 zwischen der Eintrittsöffnung 20 und der Austrittsöffnung 21 konstant ausgeführt sein.

Wie aus den Darstellungen in Fig. 3 und 4 ersichtlich, weist das Saatgutführungselement 5 im Querschnitt gesehen auf seiner einem Feldboden 22 zugewandten Unterseite 23 im Inneren einen Bodenabschnitt 25 und auf seiner dem Feldboden 22 abgewandten Oberseite 24 einen Deckenabschnitt 26 auf.

In Fig. 5 ist eine Ansicht des Saatgutführungselementes 5 von schräg hinten dargestellt. Ausgehend von dem flanschförmigen Abschnitt 19 ist die innere Kontur des Saatgutführungselementes 5 dargestellt. Die Darstellung in Fig. 6 zeigt eine Frontalansicht auf die Eintrittsöffnung 20 des Saatgutführungselementes 5 gemäß Fig. 5.

Aus Fig. 5 ist ersichtlich, dass sich, ausgehend vom flanschförmigen Abschnitt 19 im Bereich der Eintrittsöffnung 20, eine Einlaufbreite 27 des Bodenabschnitts 25 in Längsrichtung bzw. Förderrichtung FR auf eine Auslaufbreite 28 am freien, dem Boden zugewandten Ende des Saatgutführungselementes 5 verringert. Der Deckenabschnitt 26 weist eine Einlaufbreite 29 im Bereich der Eintrittsöffnung 20 und eine Auslaufbreite 30 im Bereich der Austrittsöffnung 21 auf. Die Auslaufbreite 28 des Bodenabschnitts 25 im Bereich der Austrittsöffnung 21 ist geringer als die Auslaufbreite 30 des Deckenabschnitts 26. Insbesondere beträgt die Auslaufbreite 30 des Deckenabschnitts 26 zumindest das Dreifache der Auslaufbreite 28 des Bodenabschnitts 25. Der Öffnungsquerschnittsverlauf ist in Förderrichtung FR des Saatgutführungselementes 5 zwischen der Eintrittsöffnung 20 und der Austrittsöffnung 21 in Richtung der Austrittsöffnung 21 abnehmend ausgeführt.

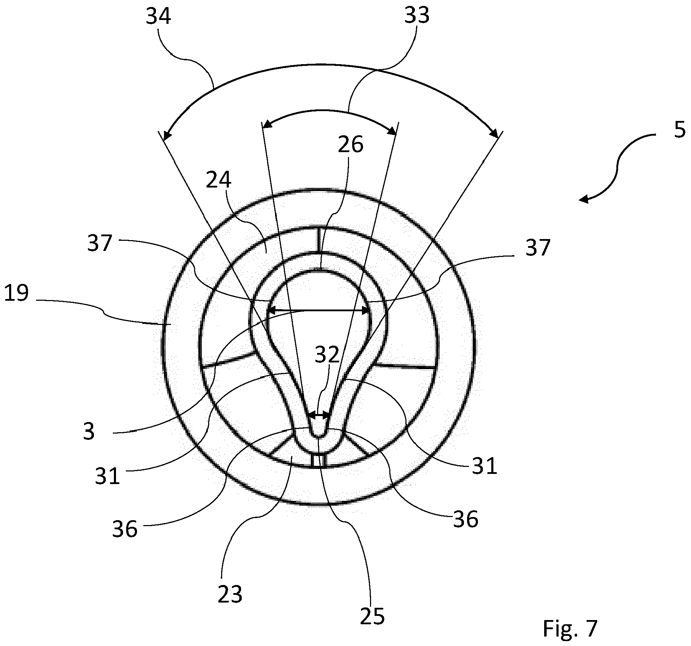

Der Bodenabschnitt 25 und der Deckenabschnitt 26 weisen über die Länge des Saatgutführungselementes 5 gesehen einen Verlauf mit einer im Wesentlichen bogenförmige Kontur auf. Der Bodenabschnitt 25 und der Deckenabschnitt 26 sind durch Seitenabschnitte 31 miteinander verbunden. Die Seitenabschnitte 31 können linear verlaufen oder, wie aus der Darstellung in Fig. 6 und 7 ersichtlich, eine konkave Kontur aufweisen. Der Öffnungsquerschnitt ist im Wesentlichen trichterförmig.

Die Darstellung in Fig. 7 zeigt eine Frontalansicht auf die Austrittsöffnung 21 des Saatgutführungselementes 5 gemäß Fig. 3. Flanken 36 des im Wesentlichen rinnen- oder V-förmigen Bodenabschnittes 25 bilden eine führende Breite 32 aus, wobei die Flanken 36 einen Öffnungswinkel 33 kleiner als 90° zwischen sich einschließen. Die sich zwischen dem Bodenabschnitt 25 und dem Deckenabschnitt 26 erstreckenden Seitenabschnitte 31 schließen einen Öffnungswinkel 34 größer als 90° zwischen sich ein. Der bogenförmige oder halbkreisförmige Deckenabschnitt 26 weist eine führende Breite 35 auf, die größer als die führende Breite 32 des Bodenabschnitts 25 ist. Die führende Breite 32 bzw. 35 bezeichnet den Abstand von einander gegenüberliegenden Flanken 36, 37 des Bodenabschnitts 25 bzw. des Deckenabschnitts 26, welche eine Querbewegung bzw. die Querkomponente im Geschwindigkeitsvektor des sich in Förderrichtung FR des Saatgutführungselementes 5 bewegenden Korns begrenzen.

Insbesondere die Form des Bodenabschnitts 25 kann von einer bogenförmigen oder kreisförmigen Kontur abweichen. Denkbar sind polygonale Konturen, wobei eine Dreiecksform die einfachste darstellt.

**Bezugszeichenliste**

| | | | |
|---|---|---|---|
| 1 | Sämaschine | 32 | Öffnungswinkel |
| 2 | Behälter | 34 | Öffnungswinkel |
| 3A | Dosierreihe | 35 | Führende Breite von 26 |
| 3B | Dosierreihe | 36 | Flanke von 25 |
| 4 | Dosiereinrichtung | 37 | Flanke von 26 |
| 5 | Saatgutführungselement | FR | Förderrichtung |
| 6 | Rahmengestell | | |
| 7 | Säschar | | |
| 8 | Tiefenführungsrolle | | |
| 9 | Hohlscheibe | | |
| 10 | Wandsegment | | |
| 11 | Förderkanal | | |
| 12 | Zulauf | | |
| 13 | Dosierabgang | | |
| 14 | Särad | | |
| 15 | Grobsärad | | |
| 16 | Feinsärad | | |
| 17 | Antriebswelle | | |
| 18 | Zahnrad | | |
| 19 | Flanschförmiger Abschnitt | | |
| 20 | Eintrittsöffnung | | |
| 21 | Austrittsöffnung | | |
| 22 | Feldboden | | |
| 23 | Unterseite | | |
| 24 | Oberseite | | |
| 25 | Bodenabschnitt | | |
| 26 | Deckenabschnitt | | |
| 27 | Einlaufbreite von 25 | | |
| 28 | Auslaufbreite von 25 | | |
| 29 | Einlaufbreite von 26 | | |
| 30 | Auslaufbreite von 26 | | |
| 31 | Seitenabschnitt | | |
| 32 | Führende Breite von 25 | | |

## Patentansprüche

1. Saatgutführungselement (5) eines Säschares (7) einer Sämaschine (1), welches von einer Dosiereinrichtung (4) zum Dosieren von rieselfähigem Saatgut aus einem Behälter (2) zugeführtes Saatgut auf einem Feldboden (22) ausbringt, wobei das ein geschlossenes Hohlprofil aufweisende Saatgutführungselement (5) mit einem Dosierabgang (13) aufweisenden Förderkanal (11) der Dosiereinrichtung (4) verbunden ist, wobei das Saatgutführungselement (5) im Bereich der Säschar (7) eine entgegen der Fahrtrichtung orientierte Austrittsöffnung (21) aufweist, **dadurch gekennzeichnet, dass** das Saatgutführungselement (5) im Querschnitt gesehen auf seiner dem Feldboden (22) zugewandten Unterseite (23) im Inneren einen Bodenabschnitt (25) und auf seiner dem Feldboden (22) abgewandten Oberseite (24) einen Deckenabschnitt (26) aufweist, wobei der Bodenabschnitt (25) eine geringere führende Breite (32) aufweist als der Deckenabschnitt (26).

2. Saatgutführungselement (5) nach Anspruch 1, **dadurch gekennzeichnet, dass** ein Öffnungsquerschnittsverlauf in Förderrichtung (FR) des Saatgutführungselementes (5) zwischen einer Eintrittsöffnung (20) und einer Austrittsöffnung (21) konstant ist oder in Richtung der Austrittsöffnung (21) abnehmend ausgeführt ist.

3. Saatgutführungselement (5) nach Anspruch 1 oder 2, **dadurch gekennzeichnet, dass** der Bodenabschnitt (25) und der Deckenabschnitt (26) eine abschnittsweise geradlinige und/oder bogenförmige Kontur aufweisen.

4. Saatgutführungselement (5) nach einem der Ansprüche 1 bis 3, **dadurch gekennzeichnet, dass** der Bodenabschnitt (25) und der Deckenabschnitt (26) durch konkav oder linear verlaufende Seitenabschnitte (31) miteinander verbunden sind.

5. Saatgutführungselement (5) nach Anspruch 4, **dadurch gekennzeichnet, dass** die Seitenabschnitte (31) segmentiert ausgebildet sind.

6. Saatgutführungselement (5) nach einem der vorangehenden Ansprüche, **dadurch gekennzeichnet, dass** das Saatgutführungselement (5) als ein Rohr oder als ein flexibler Schlauch ausgeführt ist.

7. Saatgutführungselement (5) nach einem der vorangehenden Ansprüche, **dadurch gekennzeichnet, dass** das Saatgutführungselement (5) längenveränderlich, insbesondere als längenelastisches oder telekopisches Saatgutführungselement (5), ausgebildet ist.

8. Saatgutführungselement (5) nach einem der vorangehenden Ansprüche, **dadurch gekennzeichnet, dass** das Saatgutführungselement (5) einen im Wesentlichen geraden Verlauf aufweist oder im Bereich des Säschares (7) entgegen der Fahrtrichtung gekrümmt ausgeführt ist.

9. Saatgutführungselement (5) nach einem der vorangehenden Ansprüche, **dadurch gekennzeichnet, dass** an der Eintrittsöffnung (20) ein flanschförmiger Abschnitt (19) zur Anordnung am Förderkanal (11) angeordnet ist, wobei der flanschförmige Abschnitt (19) einen im Wesentlichen kreisförmigen Querschnitt aufweist.

10. Saatgutführungselement (5) nach einem der vorangehenden Ansprüche, **dadurch gekennzeichnet, dass** der Bodenabschnitt (25) als zumindest eine sich in Förderrichtung (FR) des Saatgutführungselementes (5) erstreckende Kontur mit einem Bereich maximaler Tiefe ausgebildet ist.

11. Sämaschine (1), insbesondere mechanische Drillmaschine, mit zumindest einer Dosierreihe (3A, 3B), in der mehrere Dosiereinrichtungen (4) nebeneinander angeordnet sind, wobei jeder Dosiereinrichtung (4) ein Säschar (7) nachgeordnet ist, an der jeweils ein Saatgutführungselement (5) zur Ablage von rieselfähigem Saatgut und/oder Dünger auf einem Feldboden (22) angeordnet ist, **dadurch gekennzeichnet, dass** das Saatgutführungselement (5) nach einem der Ansprüche 1 bis 10 ausgebildet ist.

12. Sämaschine (1) nach Anspruch 11, **dadurch gekennzeichnet, dass** ein Behälter (2) für Saatgut und/oder Dünger, an dem die Dosiereinrichtungen (4) mit den Saatgutführungselementen (5) angeordnet sind, ortsfest auf einem Rahmengestell (6) angeordnet ist, wobei die Säschare (7) gegenüber dem Rahmengestell (6) relativbeweglich an diesem angeordnet sind.
